# EUROPÄISCHE PATENTSCHRIFT

(11) **EP 1 510 748 B1**
(45) Veröffentlichungstag und Bekanntmachung des Hinweises auf die Patenterteilung: **12.04.2006**
(21) Anmeldenummer: 04015658.0
(22) Anmeldetag: 02.07.2004
(51) Int. Cl.: F16M 11/10, F16M 13/02, F16M 11/04, F16C 11/10, B60R 11/02

(54) **Haltekonsole mit schwenkbarer Halteplatte**
Support stand with tiltable support plate
Console de support à platine de support inclinable

(30) Priorität: 25.08.2003 DE 20313215 U
(43) Veröffentlichungstag der Anmeldung: 02.03.2005
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- DE-A1- 19 521 785
- DE-U1- 20 120 070
- DE-U1- 20 313 215
- DE-U1- 29 707 123
- GB-A- 470 723
- GB-A- 2 247 910
- US-B1- 6 234 435
- US-B1- 6 464 185
- US-B1- 6 491 268
- US-B1- 6 517 040
- US-B1- 6 749 160

## Beschreibung

Die Erfindung betrifft eine Haltekonsole mit schwenkbarer Halteplatte zur variablen bzw. einstellbaren Halterung von Kleingeräten wie Kleincomputern (unter der Bezeichnung "PDA" (Personal Digital Assistant) bekannt), mobile Navigationsgeräte, Funktelefone und dergl.

Eine derartige Haltekonsole findet insbesondere in Kraftfahrzeugen Anwendung, um Geräte der genannten Art am Armaturenbrett, an einer Mittelkonsole oder dergl. in einer für die Benutzung des Geräts bequemen Orientierung zu halten, die je nach räumlicher Relation von Benutzer und Anbringungsort der Haltekonsole nach Bedarf einstellbar sein soll.

Es ist bereits eine Haltekonsole bekannt, die einen Fuß und eine damit über ein Kugelkopfgelenk verbundene Halteplatte aufweist. Die Halteplatte ist daher relativ zum Fuß schwenk- und drehbar, so dass ein auf der Halteplatte fixiertes Gerät auf einfache Weise in eine beliebige Position gebracht werden kann.

Aus der US-A-6 234 435 ist eine Haltekonsole mit einem Fuß, der einen Vakuumsaugermechanismus enthält, und einer schwenkbaren Halteplatte bekannt, wobei die Halteplatte über einen biegsamen Arm mit dem Fuß verbunden ist. Die Verbindung zwischen dem biegsamen Arm und dem Fuß erfolgt über eine an dem Fuß angeformte Hülse, die auch einen Teil der Betätigungsmechanik des Vakuumsaugermechanismus aufnimmt und aus dem der Betätigungshebel der Betätigungsmechanik herausragt.

Aufgabe der Erfindung ist es, eine Haltekonsole dieser grundsätzlichen Art zu schaffen, die besonders leicht am jeweiligen Verwendungsort anzubringen ist, eine variabel verstellbare, aber sichere Halterung des jeweiligen Geräts gewährleistet, und trotz der notwendigen technischen Merkmale eine formschöne Gestaltung erlaubt.

Diese Aufgabe wird gemäß der Erfindung durch die im Anspruch 1 angegebene Haltekonsole gelöst. Vorteilhafte Ausgestaltungen und Weiterbildungen der Erfindung sind Gegenstand der Unteransprüche.

Die erfindungsgemäße Konstruktion bildet die Verbindung zwischen dem Fuß und der Gelenkanordnung der Haltekonsole als schachtartiges Gehäuse aus, das einen Saugermechanismus aufnimmt und damit nicht nur eine steife und verwindungsfeste Verbindung herstellt, sondern zugleich den Saugermechanismus geschützt und unsichtbar unterbringt.

Die Ausbildung der Gelenkmechanik stellt sicher, dass zwar eine universelle Einstellbarkeit der Position des aufgenommenen Geräts in allen Orientierungen möglich ist, die eingestellte Position aber auch dann sicher beibehalten wird, wenn Erschütterungen auftreten, wie das beim Einsatz in Kraftfahrzeugen regelmäßig der Fall ist.

Die Erfindung wird nachstehend unter Bezugnahme auf die anliegenden Zeichnungen beispielshalber mehr im Einzelnen beschrieben. In den Zeichnungen zeigt:
- Fig. 1: eine Haltekonsole nach der Erfindung in perspektivischer Darstellung,
- Fig. 2: einen Schnitt durch die in Fig. 1 gezeigte Haltekonsole,
- Fig. 3: einen Schnitt durch die in Fig. 1 gezeigte Haltekonsole in einer gegenüber der Schnittebene in Fig. 2 um 90° gedrehten Schnittebene,
- Fig. 4: eine mit zusätzlichen Merkmalen ausgestattete Haltekonsole nach der Erfindung in Seitenansicht, und
- die Fig. 5A, 5B und 5C: eine gegenüber Fig. 4 weiter modifizierte Ausführungsform einer Haltekonsole in drei verschiedenen Stellungen, jeweils mit abgebrochenem Fußbereich.

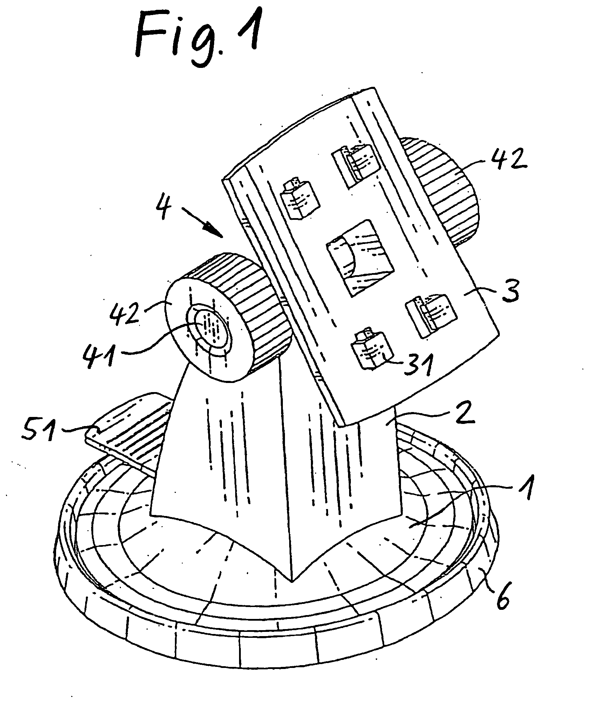

Die in den Fig. 1 bis 3 dargestellte einfache Ausführungsform einer Haltekonsole nach der Erfindung umfaßt einen Fuß 1, einer darauf angeordneten schachtartigen Säule 2, eine Halteplatte 3, und einen die Säule 2 an ihrem oberen Ende mit der Halteplatte 3 verbindenden Gelenkmechanismus 4. Im Inneren der Säule 2 und des Fußes 1 ist ein Vakuumsaugermechanismus 5 untergebracht, von dem in Fig. 1 nur der durch eine Öffnung der Säule 2 herausragende Betätigungshebel 51 sichtbar ist. Außerdem steht die in den Fig. 1 bis 3 dargestellte Ausführungsform der Haltekonsole auf einer Grundplatte 6, die nicht notwendig zur Haltekonsole gehört, aber wahlweise bzw. im Bedarfsfall benutzt werden kann. Diese Grundplatte 6 schafft eine glatte Aufstandsfläche für die Konsole für das Zusammenwirken mit dem Vakuumsaugermechanismus 5 und kann ihrerseits beispielsweise in einem Kraftfahrzeug auf einer Mittelkonsole, am Armaturenbrett oder sonst einer geeigneten Stelle befestigt, beispielsweise aufgeklebt oder aufgeschraubt sein. Die Verwendung dieser Grundplatte 6 ist dann erforderlich oder zweckmäßig, wenn Armaturenbrett, Mittelkonsole oder dergl., wo die Haltekonsole eingesetzt werden soll, keine glatte, sondern beispielsweise eine genarbte und daher für das Ansetzen eines Vakuumsaugers ungeeignete Oberfläche hat. Steht hingegen eine glatte Fläche zur Verfügung, kann die Haltekonsole mit dem Vakuumsaugermechanismus dort direkt angesetzt werden. Allerdings verhindert die Grundplatte 6 auch ein seitliches Wegrutschen der Haltekonsole, beispielsweise unter dem Einfluß starker Fliehkräfte, Erschütterungen und dergl.

Wie Fig. 1 weiter zeigt, hat die Halteplatte 3 an ihrer Oberseite eine Anordnung von vier vorspringenden Krallen 31, die mit entsprechenden Gegenelementen eines auf die Halteplatte 3 aufzusetzenden Geräteträgers rastbar zusammenwirken, so dass dadurch eine Schnellkupplung zwischen Halteplatte 3 und Geräteträger gebildet ist.

Der Gelenkmechanismus 4 ist bei der in den Fig. 1 bis 3 dargestellten Ausführungsform sehr einfach mit nur einer Scharnierachse 41 und Klemmrädern 42 zum Festklemmen in der gewählten Neigungsstellung der Halteplatte 3 ausgebildet. Die Klemmräder wirken reibschlüssig bzw. spannen die Gelenkteile reibschlüssig zusammen.

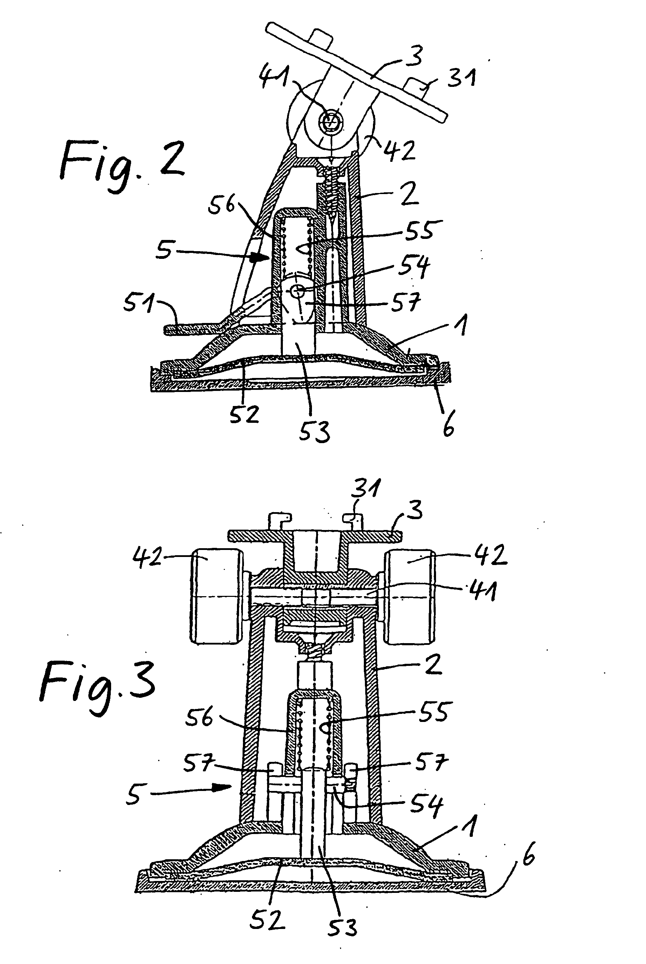

Die Schnittdarstellungen nach den Fig. 2 und 3 zeigen die Anordnung des Vakuumsaugermechanismus 5 in dem durch die schachtartige Säule 2 gebildeten Hohlraum.

Ein durch eine flexible Membran 52 gebildeter Vakuumsauger ist mit einem Schaft 53 verbunden, der mit einem Querstab 54 verbunden ist, der durch eine Druckfeder 55 in einer Federführungshülse 56 nach unten in die Lösestellung des Vakuumsaugers vorgespannt ist, und auf dessen beiderseitige Enden ein gegabelter Hebelnocken 57 des Betätigungshebels 51 wirkt. Wird der Betätigungshebel nach unten geschwenkt (das ist in die in den Fig. 1 bis 3 gezeigte Stellung), ist die Membran 52 in die Saugstellung hochgezogen und erzeugt ein Saugvakuum.

Die Saugmembran 52 des Vakuumsaugermechanismus 5 ist im Hohlraum des Fußes 1 untergebracht, während die Betätigungsmechanik des Vakuumsaugermechanismus im Hohlraum der schachtartig ausgebildeten Säule 2 angeordnet ist. Der gesamte Vakuumsauger samt seiner Betätigungsmechanik ist damit unsichtbar im Inneren der Haltekonsole untergebracht. Die schachtartig ausgebildete Säule 2 stellt dabei, wie man aus den Zeichnungen erkennen kann, eine stabile, steife und verwindungssichere Verbindung zwischen dem Fuß 1 und dem Gelenkmechanismus 3 dar. Damit wird auch einem Schwingen oder Vibrieren der Halteplatte 3 bei Erschütterungen entgegengewirkt, und es ergibt sich eine sehr stabile Abstützung und Lagerung der Scharmierachse 41. Gleichzeitig führt diese Anordnung dazu, dass die Haltekonsole insgesamt ein geschlossenes, kompaktes, und formschönes äußeres Erscheinungsbild ermöglicht.

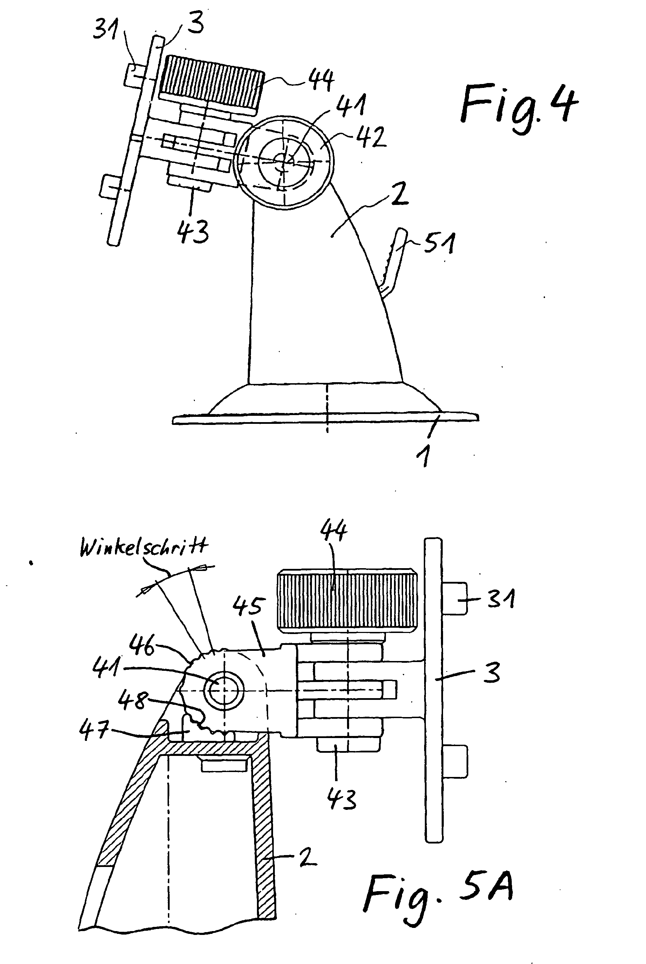

Bei der Weiterbildung der Erfindung in der Anordnung nach Fig. 4 umfaßt der Gelenkmechanismus 4 zwischen der Halteplatte 3 und der Säule 2 ein weiteres Scharniergelenk mit einer Scharnierachse 43, die senkrecht zur Scharnierachse 41 des auch in den Fig. 1 bis 3 vorhandenen Scharniergelenks orientiert ist, und der ein Klemmrad 44 zum Feststellen zugeordnet ist. Damit kann die Halteplatte 3 in alle denkbaren Richtungen geschwenkt bzw. geneigt werden, wobei natürlich auch noch die Drehbarkeit der Haltekonsole insgesamt (nach Lösen des Vakuumsaugers) um seine Hochachse, also um die Achse des vorzugsweise kreisrunden Fußes 1 hinzukommt. Die in den Fig. 1 bis 3 dargestellte Grundplatte 6 ist in Fig. 4 nicht dargestellt.

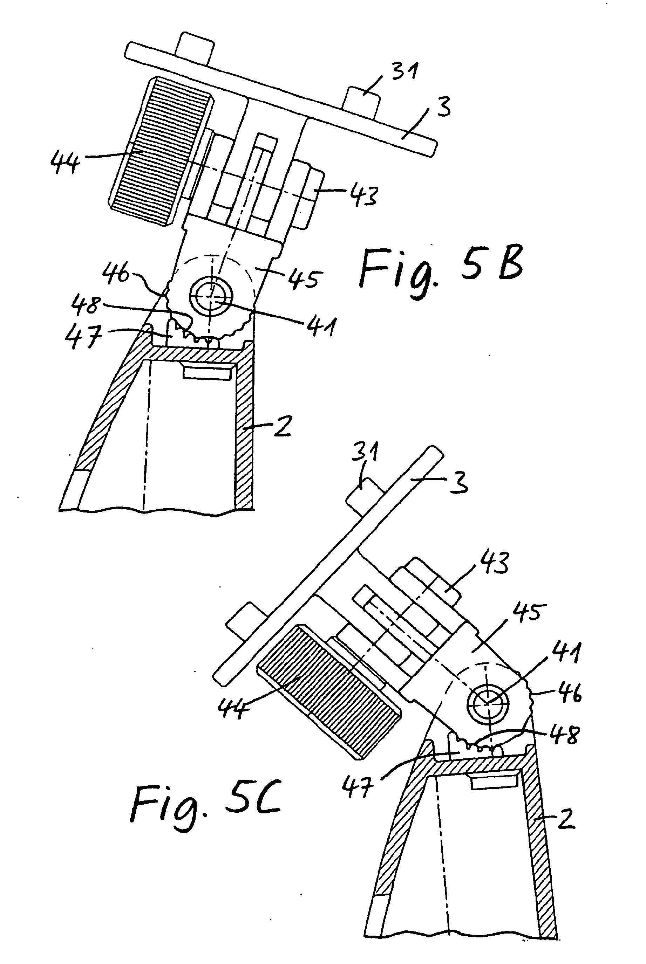

Die Fig. 5A, 5B und 5C zeigen nochmals eine Weiterbildung der Anordnung nach Fig. 4 (wobei aus Gründen der Klarheit der Fußbereich der Haltekonsole abgebrochen und der Vakuumsaugermechanismus in der Darstellung weggelassen ist).

Bei dieser Modifikation ist statt einer Klemmarretierung der Scharnierachse 41 ein Rastmechanismus vorgesehen, der ein rastendes Arretieren der Einstellung um diese Neigungsachse in kleinen Winkelstufen ermöglicht. Dazu ist dem der Halteplatte 3 zugewandten Gelenkelement 45 ein Rastnockenkranz 46 zugeordnet, der mit einem entsprechenden Gegenelement 47 an der Säule 2 zusammenwirkt, das, wie aus der Zeichnung ersichtlich, eine einem Kreisbogensegment entsprechende Reihe von Rastnocken 48 aufweist. Dieses Gegenelement 47 ist federnd angeordnet, so dass die Rastwirkung selbsttätig erfolgt und das Weiterschalten in eine andere Rastposition einfach durch Anwendung einer entsprechend starken Schwenkkraft erfolgt. Die federnde Anordnung des Gegenetements erfolgt vorzugsweise dadurch, dass das Gegenelement über einen Verbindungssteg (in den Zeichnungen nicht sichtbar) mit der übrigen Säule verbunden ist, so dass, da die ganze Anordnung vorzugsweise aus Kunststoffbesteht, die Materialelastizität die notwendige Auslenkung in Gestalt einer leichten Kippbewegung ermöglicht. Es versteht sich, dass andere Ausführungsformen, wie beispielsweise Schiebeführung des Gegenelements 47 und vorgespannte Abstützung desselben durch eine Blattfeder oder sonstige Feder möglich sind, wobei im letzteren Fall auch eine Einstellung der Rastkraft beispielsweise durch eine Stellschraube möglich ist.

## Patentansprüche

1. Haltekonsole mit schwenkbarer Halteplatte zur variablen bzw. einstellbaren Halterung von Kleingeräten wie Kleincomputern oder dergl., mit einem Fuss (1) und einer damit über einen Gelenkmechanismus (4) verbundenen Halteplatte (3), an welcher ein Geräteträger oder Gerät anbringbar ist,
wobei die Haltekonsole mit einem mechanisch betätigbaren, zwischen einer Lösestellung und einer Arbeitsstellung umschaltbaren Vakuumsaugermechanismus (5) zum Fixieren der Haltekonsole auf einer Anbringungstläche ausgestattet ist,
wobei weiter der Fuss (1) und der Gelenkmechanismus (4) durch eine schachtartig ausgebildete Säule (2) miteinander verbunden sind,
wobei das Innere der schachtartigen Säule die Betätigungsmechanik (53 bis 57) des Vakuumsaugermechanismus aufnimmt, von welchem nur ein Betätigungshebel (51) durch eine Öffnung der Säule herausragt, und eine mittels der Betätigungsmechanik betätigbare Saugmembran (52) im Inneren des Fusses (1) untergebracht ist,
und wobei die Betätigungsmechanik einen an der Saugmembran (52) angeordneten Schaft (53) aufweist, an welchem ein mit dem Betätigungshebel (51) verbundener Hebelnocken (57) innerhalb der Säule (2) angreift, sowie eine Führungshülse, in der dieser Schaft aufgenommen ist.

2. Haltekonsole nach Anspruch 1, wobei der Gelenkmechanismus (4) zwei in Reihenanordnung angeordnete Schamierachsen (41, 43) mit zueinander orthogonalen geometrischen Achsen sowie Feststellmittel zum Arretieren des Gelenkmechanismus in Bezug auf jede der Scharnierachsen in der gewählten Position aufweist.

3. Haltekonsole nach Anspruch 2, wobei die Feststellmittel für jede Achse mindestens ein Klemmrad (42, 44) oder ein ähnliches reibschlüssig wirkendes oder die Gelenkteile reibschlüssig zusammenspannendes Gelenk umfassen.

4. Haltekonsole nach Anspruch 2, wobei der ersten Scharnierachse (41) ein Rastmechanismus zugeordnet ist, bestehend aus einem der Halteplatte (3) zugewandten Gelenkelement (45) mit einem daran angeordneten Rastnockenkranz (46) und einem an der Säule (2) angeordneten Gegenelement (47), das eine einem Kreisbogensegment entsprechende Reihe von Rastnocken (48) aufweist, um ein rastendes Arretieren in kleinen Winkelstufen zu ermöglichen.

5. Haltekonsole nach Anspruch 4, wobei das Gegenelement (47) über einen in sich federelastischen Verbindungssteg mit der Säule (2) verbunden ist.

6. Haltekonsole nach Anspruch 4, wobei das Gegenelement (47) relativ zum Rastnockenkranz (46) um eine gewisse Distanz bewegbar und mittels einer Feder gegen den Rastnockenkranz (46) vorgespannt ist.

7. Haltekonsole nach Anspruch 6, wobei die Kraft der Feder mittels einer Einstellschraube oder dergl. veränderbar ist.

8. Haltekonsole nach einem der Ansprüche 1 bis 7, wobei die Halteplatte (3) mit vier davon abstehenden Krallen (31) ausgebildet ist, die mit entsprechenden Gegenelementen des aufzunehmenden Gerätehalters oder Geräts verrastbar sind.

## Claims

1. Holder console with swivelable holder plate for variable or adjustable holding of small devices such as microcomputers or similar, with a foot (1) and connected therewith by way of a joint mechanism (4) a holder plate (3) to which can be attached a device carrier or device, where the holder console is equipped with a mechanically operable vacuum sucker mechanism (5) that can be switched between a release position and a working position for fixing the holder console to an attachment surface, where furthermore the foot (1) and the joint mechanism (4) are connected together by way of a shaft-like column (2), where inside the shaft-like column is situated the control mechanism (53 to 57) of the vacuum sucker mechanism, of which only a control lever (51) protrudes through an opening in the column, and a suction membrane (52) which is operable by means of the control mechanism is accommodated inside the foot (1), and where the control mechanism has a shank (53) arranged on the suction membrane (52) and on which acts a lever cam (57) connected with the control lever (51) inside the column (2), and a guide sleeve holding this shank.

2. Holder console according to claim 1, where the joint mechanism (4) has two hinge axes (41, 43) arranged in line with geometric axes orthogonal to each other, and fixing means for locking the joint mechanism in the selected position in relation to each hinge axis.

3. Holder console according to claim 2, where the fixing means for each axis comprise at least one clamping wheel (42, 44) or similar friction-effect joint or joint clamping the hinge parts together by friction.

4. Holder console according to claim 2, where allocated to the first hinge axis (41) is a locking mechanism comprising a hinge element (45) facing the holder plate (3) with arranged thereon a locking cam crown (46) and a counter element (47) that is arranged on the column (2) and has an arc-shaped row of locking cams (49) in order to allow locking in small angle steps.

5. Holder console according to claim 4, where the counter element (47) is connected with the column (2) by way of a sprung elastic connecting web.

6. Holder console according to claim 4, where the counter element (47) can be moved by a particular distance relative to the locking cam crown (46) and is pre-tensioned against the locking crown (46) by means of a spring.

7. Holder console according to claim 6, where the force of the spring can be modified by means of a setscrew or similar.

8. Holder console according to any of claims 1 to 7, where the retaining plate (3) is formed with four claws (13) protruding therefrom which can engage with corresponding counter elements of the device holder or device to be received.

## Revendications

1. Console de maintien à platine de maintien inclinable destinée à maintenir de petits appareils tels que des petits ordinateurs ou analogues en position variable ou réglable, comprenant un pied (1) et une platine de maintien (3) reliée à ce pied par l'intermédiaire d'un mécanisme d'articulation (4) et à laquelle un support d'appareil ou un appareil peut être fixé,
dans laquelle ladite console de maintien est équipée d'un mécanisme à ventouse (5) pouvant être actionné mécaniquement, servant à fixer la
console de maintien sur une surface d'installation, et qui peut être commuté entre une position de relâchement et une position de travail,
dans laquelle le pied (1) et le mécanisme d'articulation (4) sont par ailleurs reliés l'un à l'autre par une colonne (2) en forme de tige,
dans laquelle l'intérieur de la colonne en forme de tige reçoit la mécanique d'actionnement (53 à 57) du mécanisme à ventouse, d'où seul un levier d'actionnement (51) émerge à travers une ouverture de la colonne, et une membrane aspirante (52), qui peut être actionnée au moyen de la mécanique d'actionnement, est logée à l'intérieur du pied (1),
et dans laquelle la mécanique d'actionnement comporte une tige (53) attachée à la membrane aspirante (52) et qui est attaquée à l'intérieur de la colonne (2) par une came de levier (57) reliée au levier d'actionnement (51), et une douille de guidage dans laquelle cette tige est logée.

2. Console de maintien selon la revendication 1, dans laquelle le mécanisme d'articulation (4) comporte deux axes de charnières (41, 43) disposés en série ayant des axes géométriques mutuellement orthogonaux, ainsi que des moyens d'immobilisation pour bloquer le mécanisme d'articulation dans la position choisie par rapport à chacun des axes de charnières.

3. Console de maintien selon la revendication 2, dans laquelle les moyens d'immobilisation prévus pour chaque axe comprennent au moins une molette de serrage (42, 44) ou une articulation analogue, se comportant comme une liaison à friction, ou qui serre les éléments de l'articulation l'un contre l'autre en formant une liaison à friction.

4. Console de maintien selon la revendication 2, dans laquelle, au premier axe de charnière (41), est associé un mécanisme d'encliquetage composé d'un élément d'articulation (45) dirigé vers la platine de maintien (3) et auquel est fixée une couronne de bossages d'encliquetage (46), et d'un élément conjugué (47) attaché à la colonne (2) et qui comporte une série de bossages d'encliquetage (48) disposés selon un segment d'arc de cercle, pour permettre un blocage par encliquetage par petits pas angulaires.

5. Console de maintien selon la revendication 4, dans laquelle l'élément conjugué (47) est relié à la colonne (2) par l'intermédiaire d'une barrette de liaison ayant en soi une élasticité de ressort.

6. Console de maintien selon la revendication 4, dans laquelle l'élément conjugué (47) peut se déplacer par rapport à la couronne de bossages d'encliquetage (46) sur une certaine distance, et est précontraint contre la couronne de bossages d'encliquetage (46) au moyen d'un ressort.

7. Console de maintien selon la revendication 6, dans laquelle la force du ressort peut être modifiée au moyen d'une vis de réglage ou analogue.

8. Console de maintien selon l'une des revendications 1 à 7, dans laquelle la platine de maintien (3) est pourvue de quatre griffes (31) qui font saillie sur elle et qui peuvent être encliquetées avec des éléments conjugués correspondants du support d'appareil ou de l'appareil qu'il s'agit de recevoir.
